# EUROPEAN PATENT APPLICATION

(11) **EP 4 358 181 A1**
(43) Date of publication of application: **24.04.2024**
(21) Application number: 21945677.9
(22) Date of filing: 10.08.2021
(51) Int. Cl.: H01M 4/36, H01M 4/38, H01M 4/587

(54) **UNIFORMLY MODIFIED SILICON-BASED COMPOSITE MATERIAL, PREPARATION METHOD THEREFOR AND APPLICATION THEREOF**

(30) Priority: 16.06.2021 CN 202110668605
(71) Applicant: Tianmulake Excellent Anode Materials Co, Ltd., Liyang, Jiangsu 213330 (CN)
(72) Inventor: LUO, Fei, Liyang, Jiangsu 213330 (CN)
(74) Representative: Glück Kritzenberger Patentanwälte PartGmbB
(86) International application number: PCT/CN2021/111677
(87) International publication number: WO 2022/262096

(57) **Abstract**

A uniformly modified silicon-based composite material, as well as a preparation method therefor and an application thereof. The general formula of the silicon-based composite material is SiCₓA_{y}O_{z},0<x<20,0<y<10 and 0<z<10.A is one or more of B,Al,Mg,Ca,Fe,Co,Ni,Cu,Zn,Ge,Sn and Li,C is uniformly dispersed in the particles of the silicon-based composite material at an atomic scale, and no agglomerations of carbon atoms larger than 20 nm are present; apart or all of the carbon atoms are combined with the silicon atom to generate disordered Si-C keys; in a focused ion beam-transmission electron microscope (FIB-TEM)test of the silicon-based composite material, energy spectrum scanning of the particle section shows that the elemental silicon, elemental carbon, elemental A and elemental oxygen are uniformly distributed in the particle; the microstructure of the silicon-based composite material is a multiphase dispersion structure; the average particle size D₅₀ of the silicon-based composite material is 1 nm-100 µm, and the specific surface area of the silicon-based composite material is 0.5m²/g-40m²/g; the mass of the carbon atoms accounts for 0.1%-40%of the mass of the silicon-based composite material; the mass of the A atoms accounts for 3%-40%of the mass of the composite particle.

## Description

### CROSS-REFERENCE TO RELATED APPLICATION

This application claims priority to Chinese Patent Application No. 202110668605.8, filed on June 16, 2021 and entitled "UNIFORMLY MODIFIED SILICON-BASED COMPOSITE MATERIAL, PREPARATION METHOD THEREFOR AND APPLICATION THEREOF" before CNIPA.

### BACKGROUND OF THE INVENTION

### 1. Technical Field

The present invention relates to the technical field of materials, and in particular to a uniformly modified silicon-based composite material, a preparation method therefor and an application thereof.

### 2. Description of Related Art

With the rapid development of lithium-ion battery application and the increasing demand for high-energy density, the development of an electrode material with a high specific capacity has become the focus of researches in the field of lithium batteries. Cathode materials are one of the four major materials for lithium-ion batteries, and their capacity level largely affects the level of energy density of lithium-ion batteries. Silicon and lithium form an alloy at a lower potential and react to produce Li_{3.75}Si. Here, the specific capacity may reach 3975 mAh/g. However, the huge volume change of silicon, which is up to 300% during lithium deintercalation, seriously limits the application of this material.

Compared with silicon that has a huge volume change, silicon monoxide (SiOx) undergoes volume expansion by about 150% in a lithium intercalation state, and its specific capacity (approximately 1700 mAh/g) is still much higher than that of currently commercialized graphite (372 mAh/g), although lower than that of a silicon material. Therefore, silicon oxide has become one of the research hotspots for cathode materials. However, silicon monoxide has low first-cycle efficiency (approximately 78%), and its volume change by 150% still faces the problem of pulverization.

Carbon coating is a relatively common modification method, whereby, on the one hand, the direct contact between electrolyte and SiOx can be avoided to reduce the formation of a solid electrolyte interface (SEI) and to improve the reversible capacity of materials; and on the other hand, the mechanical action of surface carbon can also buffer the volume change of SiOx particles during the lithium deintercalation to improve the cycling performance of this material; and furthermore, the electronic electroconductivity on the material surface can also be improved to increase the rate performance of the material. However, carbon coating can only change surface electroconductivity, and in order to achieve rapid charging performance, the electroconductivity inside particles also needs to be improved.

### BRIEF SUMMARY OF THE INVENTION

An embodiment of the present invention provides a uniformly modified silicon-based composite material, a preparation method therefor and an application thereof. By means of bulk-phase doped distribution of carbon and A elements, the electroconductivity of the material and the cycling stability of lithium-ion batteries are improved.

In the first aspect, an embodiment of the present invention provides a uniformly modified silicon-based composite material having a general formula of SiCₓA_{y}O_{z}, with 0 < x < 20, 0 < y < 10, and 0 < z < 10,
wherein A is one or more of B, Al, Mg, Ca, Fe, Co, Ni, Cu, Zn, Ge, Sn, and Li, C is uniformly and dispersively distributed on an atomic scale inside particles of the silicon-based composite material, and no carbon element agglomeration above 20 nm occurs; some or all of carbon atoms bind to silicon atoms to form unordered Si-C bonds; in a focused ion beam-transmission electron microscopy (FIB-TEM) test for the silicon-based composite material, energy-spectrum surface scanning of particle sections shows uniform distribution of silicon, carbon, A and oxygen elements inside the particles;
the silicon-based composite material has a multi-phase dispersive microstructure;
the particles of the silicon-based composite material have an average particle size D₅₀ of 1 nm-100 µm and a specific surface area of 0.5 m²/g-40 m²/g; the carbon atoms have a mass accounting for 0.1%-40% of a mass of the silicon-based composite material; and the A element has a mass accounting for 3%-40% of the mass of the particles of the composite material.

Preferably, the silicon-based composite material has a carbon coating outside; and the carbon coating has a mass accounting for 0%-20% of the mass of the silicon-based composite material.

Further preferably, the carbon atoms have the mass accounting for 0.5%-10% of the mass of the silicon-based composite material; and the carbon coating has the mass accounting for 0%-10% of the mass of the silicon-based composite material.

In the second aspect, an embodiment of the present invention provides a preparation method for the uniformly modified silicon-based composite material according to the first aspect described above. The preparation method includes a one-step vapor deposition method or a two-step vapor deposition method.

Preferably, the one-step vapor deposition methodincludes:
mixing silicon powder, silicon dioxide powder, elemental A powder and/or A oxide powder uniformly according to a desired amount, and placing a resulting mixture in a vacuum furnace;
reducing the pressure of the vacuum furnace, and heating the furnace to 1200°C-1700°C to obtain a mixed vapor containing silicon, oxygen and A elements;
introducing a carbon-containing gas source in a protective atmosphere into the vacuum furnace to carry out a gas-phase mixing reaction with the mixed vapor for 1-24 hours; and
cooling a material resulting from the gas-phase mixing reaction to room temperature, and discharging, crushing and sieving the material to obtain a silicon-based composite material SiCₓA_{y}O_{z} with carbon elements uniformly and dispersively distributed on an atomic scale.

Preferably, the two-step vapor deposition method includes:
mixing silicon powder and silicon dioxide powder uniformly according to a desired amount, and placing a resulting mixture in a vacuum furnace;
reducing the pressure of the vacuum furnace, and heating the furnace to 1200°C-1700°C to obtain a mixed vapor containing silicon and oxygen elements;
introducing a carbon-containing gas source in a protective atmosphere into the vacuum furnace to carry out a gas-phase mixing reaction with the mixed vapor for 1-24 hours; and
cooling a material resulting from the gas-phase mixing reaction to room temperature, and discharging, crushing and sieving the material to obtain a composite material SiCₓO_{z} with carbon elements uniformly and dispersively distributed on an atomic scale; and
mixing SiCₓO_{z} and elemental A powder and/or A oxide powder uniformly, placing a resulting mixture in a high-temperature furnace, and thermally treating the mixture for 2-24 hours at 600°C-1500°C to obtain a silicon-based composite material SiCₓA_{y}O_{z} with carbon elements uniformly and dispersively distributed on an atomic scale.

Further preferably, the carbon-containing gas source includes: one or more of methane, propane, butane, acetylene, ethylene, propylene, butadiene, or carbon monoxide.

Preferably, after cooling the material to room temperature, and discharging, crushing and sieving the material, the preparation method further includes: carrying out carbon coating on the sieved material, and carrying out classification to obtain the cathode material.

Further preferably, after cooling the material to room temperature, and discharging, crushing and sieving the material, the preparation method further includes: carrying out carbon coating on the sieved material, wherein the carbon coating includes at least one of gas-phase coating, liquid-phase coating, and solid-phase coating.

In the third aspect, an embodiment of the present invention provides a cathode plate including the uniformly modified silicon-based composite material according to the first aspect described above.

In the fourth aspect, an embodiment of the present invention provides a lithium battery including the cathode plate according to the third aspect described above.

According to the uniformly modified silicon-based composite material SiCₓA_{y}O_{z} provided by the present invention, by means of the bulk-phase doped distribution of the C and A elements, the bulk-phase electroconductivity of the silicon-based material is improved, and a buffer space for uniform bulk-phase distribution is provided for the volume expansion of the silicon-based material, which improves the rapid charging performance, initial Coulombic efficiency and cycling stability for the material.

### BRIEF DESCRIPTION OF THE SEVERAL VIEWS OF THE DRAWINGS

The technical solutions of the embodiments of the present invention will be further described in detail below by means of the accompanying drawings and embodiments.
FIG. 1 is a flowchart of a preparation method for a silicon-based composite material according to an embodiment of the present invention;
FIG. 2 is a flowchart of a preparation method for a silicon-based composite material according to an embodiment of the present invention; and
FIG. 3 is a FIB-TEM energy-spectrum surface scannogram of a silicon-based cathode material with carbon atoms uniformly and dispersively distributed therein on an atomic scale according to Example 1 of the present invention.

### DETAILED DESCRIPTION OF THE INVENTION

The present invention is further illustrated below by means of the accompanying drawings and specific embodiments. However, it should be understood that these embodiments are merely for the purpose of more detailed explanation, and should not be understood as limiting the present invention in any form. That is, these embodiments are not intended to limit the protection scope of the present invention.

The present invention provides a uniformly modified silicon-based composite material having a general formula of SiCₓA_{y}O_{z}, with 0 < x < 20, 0 < y < 10, and 0 < z < 10.

A is one or more of B, Al, Mg, Ca, Fe, Co, Ni, Cu, Zn, Ge, Sn, and Li, C is uniformly and dispersively distributed on an atomic scale inside particles of the silicon-based composite material, and no carbon element agglomeration above 20 nm occurs; some or all of carbon atoms bind to silicon atoms to form unordered Si-C bonds; and in a focused ion beam-transmission electron microscopy (FIB-TEM) test for the silicon-based composite material, energy-spectrum surface scanning of particle sections shows uniform distribution of silicon, carbon, A and oxygen elements inside the particles.

The silicon-based composite material has a multi-phase dispersive microstructure.

The particles of the silicon-based composite material have an average particle size D₅₀ of 1 nm-100 µm and a specific surface area of 0.5 m²/g-40 m²/g; the carbon atoms have a mass accounting for 0.1%-40%, preferably 0.5%-10%, of a mass of the silicon-based composite material; and the A element has a mass accounting for 3%-40% of the mass of the particles of the composite material.

The exterior of the material above may also be coated with a carbon coating, which has a mass accounting for 0%-20%, preferably 0-10%, of the mass of the silicon-based composite material.

The uniformly modified silicon-based composite material described above according to the present invention may be obtained by a one-step vapor deposition method or a two-step vapor deposition method.

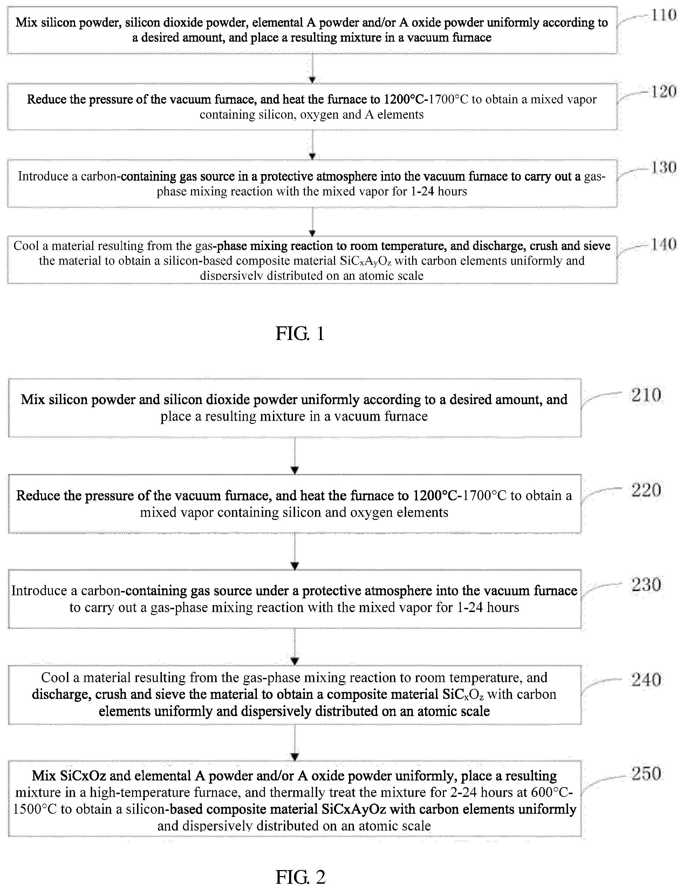

As shown in FIG. 1, the one-step vapor deposition method includes the following steps:
step 110, mixing silicon powder, silicon dioxide powder, elemental A powder and/or A oxide powder uniformly according to a desired amount, and placing a resulting mixture in a vacuum furnace;
step 120, reducing the pressure of the vacuum furnace, and heating the furnace to 1200°C-1700°C to obtain a mixed vapor containing silicon, oxygen and A elements,
   wherein the pressure of the vacuum furnace is reduced to 300 Pa and below;
step 130, introducing a carbon-containing gas source in a protective atmosphere into the vacuum furnace to carry out a gas-phase mixing reaction with the mixed vapor for 1-24 hours,
   wherein the protective atmosphere may be an N₂ or Ar atmosphere, and the carbon-containing gas source includes: one or more of methane, propane, butane, acetylene, ethylene, propylene, butadiene, or carbon monoxide; and
step 140, cooling a material resulting from the gas-phase mixing reaction to room temperature, and discharging, crushing and sieving the material to obtain a silicon-based composite material SiCₓA_{y}O_{z} with carbon elements uniformly and dispersively distributed on an atomic scale.

As shown in FIG. 2, the two-step vapor deposition method includes the following steps:
step 210, mixing silicon powder and silicon dioxide powder uniformly according to a desired amount, and placing a resulting mixture in a vacuum furnace;
step 220, reducing the pressure of the vacuum furnace, and heating the furnace to 1200°C-1700°C to obtain a mixed vapor containing silicon and oxygen elements;
   wherein the pressure of the vacuum furnace is reduced to 300 Pa and below;
step 230, introducing a carbon-containing gas source in a protective atmosphere into the vacuum furnace to carry out a gas-phase mixing reaction with the mixed vapor for 1-24 hours,
   wherein the protective atmosphere may be an N₂ or Ar atmosphere, and the carbon-containing gas source includes: one or more of methane, propane, butane, acetylene, ethylene, propylene, butadiene, or carbon monoxide;
step 240, cooling a material resulting from the gas-phase mixing reaction to room temperature, and discharging, crushing and sieving the material to obtain a composite material SiCₓO_{z} with carbon elements uniformly and dispersively distributed on an atomic scale; and
step 250, mixing SiCₓO_{z} and elemental A powder and/or A oxide powder uniformly, placing a resulting mixture in a high-temperature furnace, and thermally treating the mixture for 2-24 hours at 600°C-1500°C to obtain a silicon-based composite material SiCₓA_{y}O_{z} with carbon elements uniformly and dispersively distributed on an atomic scale.

On the basis of the two methods above, further, if the silicon-based composite material having an exterior provided with a carbon coating, the crushed material may also undergo carbon coating and classification to obtain the silicon-based composite material. The specific methods for carbon coating may include at least one of gas-phase coating, liquid-phase coating, and solid-phase coating. These methods are common coating methods in the process of preparing battery materials, and will not be explained in detail here anymore.

According to the silicon-based composite material having carbon elements uniformly and dispersively distributed inside particles on an atomic scale as provided by the present invention, by means of the bulk-phase doped distribution of the C and A elements, the bulk-phase electroconductivity of the silicon-based material is improved, and a buffer space for uniform bulk-phase distribution is provided for the volume expansion of the silicon-based material, which improves the rapid charging performance, initial Coulombic efficiency and cycling stability for the material.

The silicon-based composite material provided by the present invention may be used in the preparation of cathode plates for application in lithium batteries.

In order to better understand the technical solutions provided by the present invention, a plurality of specific examples respectively described below to illustrate the specific processes of preparing the silicon-based composite material using the methods provided in the aforementioned embodiments of the present invention, the methods for applying the composite material to lithium secondary batteries, and the properties of the composite material.

### Example 1

The mixed powder of 1 kg of silicon powder, 1 kg of silicon dioxide powder, and 0.3 kg of copper oxide was placed in a vacuum furnace, which was then vacuumized to 50 Pa, and the mixture was heated to 1500°C to turn into vapor. Under an argon flow, 1.6 L of methane was slowly introduced at the same time to react for 3 hours, and a resultant material was cooled to room temperature. The material was discharged and crushed to obtain a silicon-based composite material with carbon and copper elements uniformly and dispersively distributed therein on an atomic scale. It was tested by a carbon sulfur analyzer that the content of carbon of the silicon-based composite material was 1.5%.

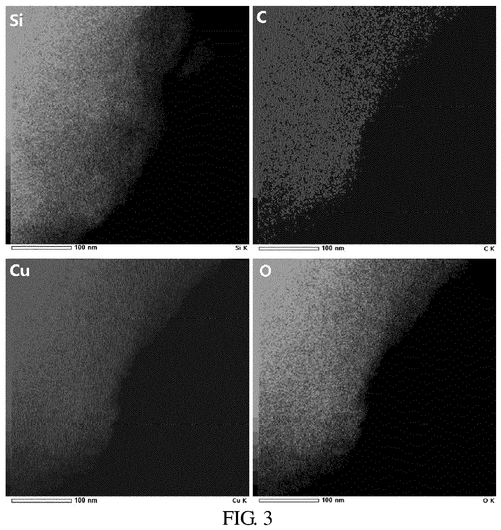

An FIB-TEM test was carried out on the obtained silicon-based composite material, in which the element distribution inside particles was observed by means of energy-spectrum detection. FIG. 3 is an FIB-TEM energy-spectrum surface scanogram. From the energy-spectrum element surface scanning shown in FIG. 3, it could be seen that the four elements Si, C, Cu and O were uniformly distributed in the particles.

Afterwards, carbon coating was carried out on the silicon-based composite material by placing 2 kg of the material in a rotary furnace, heating the material to 1000°C in a protective atmosphere, introducing argon and propylene at a volume ratio of 1:1 for gas-phase coating, holding the temperature for 2 hours, then turning off an organic gas source, and cooling, charging and classifying the material to obtain the silicon-based composite material containing a carbon coating, where the total content of carbon was 4.5%.

The silicon-based composite material containing the carbon coating as a cathode material, conductive carbon black ,Super P, as an electroconductive additive, and polyvinylidene fluoride (PVDF) as a binder were weighed at a ratio of 95%:2%:3%, and placed in a beating machine to prepare slurry at the room temperature. A copper foil was uniformly coated with the prepared slurry. The copper foil coated with the slurry was dried for 2 hours in an air-blast drying oven at 50°C, cut into electrode plates of 8 × 8 mm, and then vacuumized and dried for 10 hours in a vacuum drying oven at 100°C. The dried electrode plates were subsequently transferred into a glove box for later use to assemble a battery.

A simulated battery assembly was assembled in the glove box containing a high-purity Ar atmosphere, where the battery was assembled by taking lithium metal as a counter electrode and ethylene carbonate/dimethyl carbonate (EC/DMC v:v=1:1) solution containing 1 mol /L of LiPF₆ in as electrolyte. A constant-current charging-discharging mode test was carried out by using a charging-discharging instrument, where a discharge cut-off voltage was 0.005 V, a charge cut-off volage was 1.5 V, the first cycle of the charging-discharging test was carried out at the C/10 current density, and the second cycle of discharging test was carried out at the C/10 current density. The test results of initial efficiency, reversible capacity at 0.1 C, and cycling performance at 0.1 C rate are shown in Table 1.

### Example 2

The mixed powder of 1 kg of silicon powder and 1 kg of silicon dioxide powder was placed in a vacuum furnace, which was then vacuumized to 50 Pa, and the mixture was heated to 1500°C to turn into vapor. Subsequently, under an argon flow, 1.6 L of methane was slowly introduced at the same time to react for 3 hours, and a resultant material was cooled to room temperature. The material was discharged and crushed to obtain silicon-based material powder with carbon elements uniformly and dispersively distributed therein on an atomic scale. It was tested by a carbon sulfur analyzer that the content of carbon of the silicon-based composite material was 1.8%.

The obtained silicon-based material powder with the carbon elements uniformly and dispersively distributed therein on an atomic scale and copper oxide were mixed uniformly at a molar ratio of 1:0.4, and then thermally treated for 4 hours at 1000°C to obtain a silicon-based composite material containing carbon and copper elements therein.

Afterwards, carbon coating was carried out on the above material. Specifically, 2 kg of the silicon-based composite material was placed in a rotary furnace; the material was heated to 1000°C in an argon protective atmosphere; argon and propylene were introduced at a volume ratio of 1:1 for gas-phase coating; and the temperature was held for 2 hours, and the organic gas source was then turned off. The material was cooled, discharged and classified to obtain the silicon-based composite material containing a carbon coating, where the total content of carbon was 4.6%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 3

The mixed powder of 3kg of silicon powder, 3kg of silicon dioxide, and 1kg of boron oxide was placed in a vacuum furnace, vacuumized to 100 Pa, and heated to 1350°C to turn into vapor; under an argon flow, 23.4 L of propane was slowly introduced at the same time to react for 8 hours; and a resultant material was cooled to room temperature. The material was discharged and crushed to obtain a silicon-based composite material with carbon and boron elements uniformly and dispersively distributed therein on an atomic scale. It was tested by a carbon sulfur analyzer that the carbon content of the silicon-based composite material was 2.0%.

Afterwards, carbon coating was carried out on the silicon-based composite material by placing 2 kg of the material in a rotary furnace, heating the material to 900°C in an argon protective atmosphere, introducing, at a volume ratio of 1:1, argon and the mixed gas (at an equal amount to the argon) of propylene and methane (at a volume ratio of 2:3) for gas-phase coating. The temperature was held for 3 hours, and then an organic gas source was turned off; and the material was cooled, discharged and classified to obtain the silicon-based composite material containing a carbon coating, with the total content of carbon of 4.7%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 4

The mixed powder of 2kg of silicon powder and 2kg of silicon dioxide powder was placed in a vacuum furnace, which was then vacuumized to 150 Pa, and the mixture was heated to 1400°C to turn into vapor. Under an argon flow, 1 L of propylene was slowly introduced at the same time to react for 5 hours, and a resultant material was cooled to room temperature. The material was discharged and crushed to obtain a silicon-based composite material with carbon elements uniformly and dispersively distributed therein on an atomic scale. It was tested by a carbon sulfur analyzer that the carbon content of the silicon-based composite material was 2.0%.

The obtained silicon-based composite material with the carbon elements uniformly and dispersively distributed therein on an atomic scale and aluminum metal were mixed uniformly at a molar ratio of 2:1, and then thermally treated for 4 hours at 1200°C to obtain a silicon-based composite material containing carbon and copper elements therein.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 5

The mixed powder of 3kg of silicon, 3kg of silicon dioxide, and 1kg of magnesium metal was placed in a vacuum furnace, vacuumized to 150 Pa, and heated to 1400°C to turn into vapor; under an argon flow, the mixed gas of 11.7 L of acetylene and 5 L of methane was slowly introduced at the same time to react for 4 hours; and a resultant material was cooled to room temperature. The material was discharged and crushed to obtain a silicon-based composite material with carbon and magnesium elements uniformly and dispersively distributed therein on an atomic scale. It was tested by a carbon sulfur analyzer that the carbon content of the silicon-based composite material was 1.8%.

Afterwards, carbon coating was carried out on the silicon-based composite material by placing 2 kg of the material in a rotary furnace, heating the material to 1100°C in an argon protective atmosphere, introducing, at a volume ratio of 1:1, argon and the mixed gas (at an equal amount to the argon) for gas-phase coating, wherein the mixed gas is propylene and methane at a volume ratio of 2:3. The temperature was held for 3 hours, and then an organic gas source was turned off; and the material was cooled, discharged and classified to obtain the silicon-based composite material containing a carbon coating, where the total content of carbon was 6.5%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 6

The mixed powder of 5kg of silicon powder and 5kg of silicon dioxide powder was placed in a vacuum furnace, which was then vacuumized to 150 Pa, and the mixture was heated to 1400°C to turn into vapor. Under an argon flow, 1 L of acetylene gas was slowly introduced at the same time to react for 5 hours, and a resultant material was cooled to room temperature. The material was discharged and crushed to obtain silicon-based material powder with carbon elements uniformly and dispersively distributed therein on an atomic scale. It was tested by a carbon sulfur analyzer that the content of carbon of the silicon-based composite material was 0.8%.

The obtained silicon-based material powder with the carbon elements uniformly and dispersively distributed therein on an atomic scale and calcium oxide were mixed uniformly at a molar ratio of 3:1, and then thermally treated for 4 hours at 1200°C to obtain a silicon-based composite material containing carbon and calcium elements therein.

Afterwards, carbon coating was carried out on the silicon-based composite material by placing 1.5kg of the material in a rotary furnace, heating the material to 850°C in a protective atmosphere, introducing argon and propane (at an equal amount to the argon) at a volume ratio of 1:1 for gas-phase coating, the temperature was held for 1.5 hours, then turning off an organic gas source, and cooling, charging and classifying the material to obtain the silicon-based composite material containing a carbon coating, where the total content of carbon was 5.5%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 7

The mixed powder of 2kg of silicon, 3kg of silicon dioxide, and 0.5kg of iron metal was placed in a vacuum furnace, vacuumized to 100 Pa, and heated to 1600°C to turn into vapor; under an argon flow, 1 L of butane was slowly introduced at the same time to react for 3 hours; and a resultant material was cooled to room temperature. The material was discharged and crushed to obtain a silicon-based composite material with carbon and iron elements uniformly and dispersively distributed therein on an atomic scale. It was tested by a carbon sulfur analyzer that the carbon content of the silicon-based composite material was 2%.

Afterwards, carbon coating was carried out on the silicon-based composite material by placing 2 kg of the material in a rotary furnace, heating the material to 700°C in an argon protective atmosphere, and introducing argon and propylene at a volume ratio of 1:2 for gas-phase coating. The temperature was held for 2 hours, and then an organic gas source was turned off; and the material was cooled, discharged and classified to obtain the silicon-based composite material containing a carbon coating, where the total content of carbon was 4.5%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 8

The mixed powder of 3kg of silicon powder and 5kg of silicon dioxide powder was placed in a vacuum furnace, which was then vacuumized to 150 Pa, and the mixture was heated to 1400°C to turn into vapor. Under an argon flow, 1.5 L of butadiene gas was slowly introduced at the same time to react for 6 hours, and a resultant material was cooled to room temperature. The material was discharged and crushed to obtain silicon-based material powder with carbon elements uniformly and dispersively distributed therein on an atomic scale. It was tested by a carbon sulfur analyzer that the carbon content of the silicon-based composite material was 1.3%.

The obtained silicon-based material powder with the carbon elements uniformly and dispersively distributed therein on an atomic scale and cobalt metal were mixed uniformly at a molar ratio of 5:1, and then thermally treated for 4 hours at 1200°C to obtain a silicon-based composite material containing carbon and cobalt elements therein.

Afterwards, carbon coating was carried out on the silicon-based composite material by placing 1.5kg of the material in a rotary furnace, heating the material to 850°C in an argon protective atmosphere, and introducing, at a volume ratio of 1:1, argon and the mixed gas (at an equal amount to the argon) of acetylene and propane (at a volume ratio of 3:1) for gas-phase coating. The temperature was held for 3 hours, and then an organic gas source was turned off; and the material was cooled, discharged and classified to obtain the silicon-based composite material containing a carbon coating, where the total content of carbon was 5.5%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 9

The mixed powder of 5kg of silicon, 4kg of silicon dioxide, and 1kg of nickel metal was placed in a vacuum furnace, vacuumized to 100 Pa, and heated to 1700°C to turn into vapor; under an argon flow, 1.4 L of carbon monoxide was slowly introduced at the same time to react for 12 hours; and a resultant material was cooled to room temperature. The material was discharged and crushed to obtain a silicon-based composite material with carbon and iron elements uniformly and dispersively distributed therein on an atomic scale. It was tested by a carbon sulfur analyzer that the carbon content of the silicon-based composite material was 0.6%.

Afterwards, carbon coating was carried out on the silicon-based composite material by placing 2 kg of the material in a rotary furnace, heating the material to 600°C in an argon protective atmosphere, introducing argon and propylene at a volume ratio of 1:3 for gas-phase coating. The temperature was held for 2 hours, and then an organic gas source was turned off; and the material was cooled, discharged and classified to obtain the silicon-based composite material containing a carbon coating, where the total content of carbon was 3.5%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 10

The mixed powder of 5kg of silicon powder and 5kg of silicon dioxide powder was placed in a vacuum furnace, which was then vacuumized to 150 Pa, and the mixture was heated to 1400°C to turn into vapor. Under an argon flow, the mixed gas of 2.0 L of carbon monoxide and 1.2 L of acetylene gas was slowly introduced at the same time to react for 10 hours, and a resultant material was cooled to room temperature. The material was discharged and crushed to obtain silicon-based material powder with carbon elements uniformly and dispersively distributed therein on an atomic scale. It was tested by a carbon sulfur analyzer that the carbon content of the silicon-based composite material was 3%.

The obtained silicon-based material powder with the carbon elements uniformly and dispersively distributed therein on an atomic scale and zinc metal were mixed uniformly at a molar ratio of 2:1, and then thermally treated for 4 hours at 1200°C to obtain a silicon-based cathode material containing carbon and zinc elements therein.

Afterwards, carbon coating was carried out on the material. Specifically, 2 kg of the material and petroleum asphalt were mixed at a mass ratio of 10:1 and thermally treated for 2 hours in a high-temperature furnace at 900°C in a nitrogen atmosphere; the resulting material was cooled, discharged and classified to obtain the silicon-based composite material containing a carbon coating, wherein the total content of carbon was 4.2%.

The aforementioned silicon-based composite material containing the carbon coating as a cathode material, conductive carbon black ,Super P, as an electroconductive additive, and polyvinylidene fluoride (PVDF) as a binder were weighed at a ratio of 95%:2%:3%. The weighed materials were placed in a beating machine to prepare slurry at the room temperature. A copper foil was uniformly coated with the prepared slurry. The copper foil coated with the slurry was dried for 2 hours in an air-blast drying oven at 50°C, cut into electrode plates of 8 × 8 mm, and then vacuumized and dried for 10 hours in a vacuum drying oven at 100°C. The dried electrode plates were subsequently transferred into a glove box for later use to assemble a battery.

The assembly of a simulated battery was carried out in a glove box containing a high-purity Ar atmosphere. Specifically, the above electrode as a cathode, a ternary anode material NCM811 as a counter electrode, and garnet type Li₇La₃Zr₂O₁₂ (LLZ0) as solid-state electrolyte were assembled into an all-solid-state button battery in the glove box; and the button battery was then charged and evaluated for its electrochemical properties. A constant-current charging-discharging mode test was carried out by using a charging-discharging instrument, where a discharge cut-off voltage was 0.005 V, a charge cut-off volage was 1.5V, the first cycle of the charging-discharging test was carried out at the C/10 current density, and the second cycle of discharging test was carried out at the C/10 current density. The test results of initial efficiency, reversible capacity at 0.1 C, and cycling performance at 0.1 C rate are shown in Table 1.

### Example 11

The mixed powder of 4 kg of silicon, 4 kg of silicon dioxide, and 2 kg of copper oxide was placed in a vacuum furnace, vacuumized to 100 Pa, and heated to 1700°C to turn into vapor; under an argon flow, the mixed gas of 0.9 L of methane, 1.2 L of propylene, and 1.7 L of propane was slowly introduced at the same time to react for 6 hours; and a resultant material was cooled to room temperature. The material was discharged and crushed to obtain a silicon-based composite material with carbon and copper elements uniformly and dispersively distributed therein on an atomic scale. It was tested by a carbon sulfur analyzer that the carbon content of the silicon-based composite material was 3.6%.

Afterwards, carbon coating was carried out on the material; and 3 kg of crushed sample and a phenolic resin were dissolved in an alcoholic solvent at a ratio of 20:1, and then stirred for 6 hours to form homogeneous slurry. Afterwards, the slurry was directly dried, placed in a high-temperature furnace, and sintered for 2 hours at 900°C in the nitrogen protective atmosphere; the resultant was cooled, classified and sieved to obtain the silicon-based composite material containing a carbon coating, where the total content of carbon was 6.5%.

The aforementioned silicon-based composite material containing the carbon coating as a cathode material, conductive carbon black ,Super P), as an electroconductive additive, and polyvinylidene fluoride (PVDF) as a binder were weighed at a ratio of 95%:2%:3%. The weighed materials were placed in a beating machine to prepare slurry at the room temperature. A copper foil was uniformly coated with the prepared slurry. The copper foil coated with the slurry was dried for 2 hours in an air-blast drying oven at the temperature of 50°C, cut into electrode plates of 8 × 8 mm, and then vacuumized and dried for 10 hours in a vacuum drying oven at the temperature of 100°C. The dried electrode plates were subsequently transferred into a glove box for later use to assemble a battery.

The assembly of a simulated battery was carried out in a glove box containing a high-purity Ar atmosphere. The above electrode as a cathode, a ternary anode material NCM811 as a counter electrode, and a polyolefin-based gel polymer as semi-solid-state electrolyte were assembled into a semi-solid-state button battery in the glove box; and the button battery was then charged and evaluated for its electrochemical properties. A constant-current charging-discharging mode test was carried out by using a charging-discharging instrument, where a discharge cut-off voltage was 0.005 V, a charge cut-off volage was 1.5V, the first cycle of the charging-discharging test was carried out at the C/10 current density, and the second cycle of discharging test was carried out at the C/10 current density. The test results of initial efficiency, reversible capacity at 0.1 C, and cycling performance at 0.1 C rate are shown in Table 1.

### Example 12

The mixed powder of 3kg of silicon powder and 5kg of silicon dioxide powder was placed in a vacuum furnace, which was then vacuumized to 150 Pa, and the mixture was heated to 1500°C to turn into vapor. Under an argon flow, the mixed gas of 1.7 L of methane and 1.5 L of propylene was slowly introduced at the same time to react for 3 hours, and a resultant material was cooled to room temperature. The material was discharged and crushed to obtain silicon-based material powder with carbon elements uniformly and dispersively distributed therein on an atomic scale. It was tested by a carbon sulfur analyzer that the carbon content of the silicon-based composite material was 1.5%.

The obtained silicon-based material powder with the carbon elements uniformly and dispersively distributed therein on an atomic scale and germanium metal were mixed uniformly at a molar ratio of 5:1, and then thermally treated for 4 hours at 1200°C to obtain a silicon-based composite material containing carbon and germanium elements therein.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 13

The mixed powder of 4 kg of silicon, 4 kg of silicon dioxide, and 2 kg of tin oxide was placed in a vacuum furnace, vacuumized to 100 Pa, and heated to 1700°C to turn into vapor; under an argon flow, the mixed gas of 5 L of acetylene and 5 L of ethylene was slowly introduced for 6-hour mixed reaction; and a resultant material was then cooled to room temperature. The material was discharged and crushed to obtain a silicon-based composite material with carbon and tin elements uniformly and dispersively distributed therein on an atomic scale. It was tested by a carbon sulfur analyzer that the carbon content of the silicon-based composite material was 3%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Example 14

The mixed powder of 5kg of silicon powder and 5kg of silicon dioxide powder was placed in a vacuum furnace, which was then vacuumized to 150 Pa, and the mixture was heated to 1500°C to turn into vapor. Under an argon flow, 2 L of butadiene gas was slowly introduced at the same time to react for 4 hours, and a resultant material was cooled to room temperature. The material was discharged and crushed to obtain silicon-based material powder with carbon elements uniformly and dispersively distributed therein on an atomic scale. It was tested by a carbon sulfur analyzer that the content of carbon of the silicon-based composite material was 0.5%.

The obtained silicon-based material powder with the carbon elements uniformly and dispersively distributed therein on an atomic scale and lithium oxide were mixed uniformly at a molar ratio of 5:1, and then thermally treated for 2 hours at 1000°C to obtain a silicon-based composite material containing carbon and lithium elements therein.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Comparative Example 1

The mixed powder of 1 kg of silicon powder and 1 kg of silicon dioxide powder was placed in a vacuum furnace, which was then vacuumized to 50 Pa, and the mixture was heated to 1500°C to turn into vapor. The material was discharged and crushed to obtain a silicon monoxide cathode material. Afterwards, carbon coating was carried out on the silicon-based composite material. Specifically, 2 kg of the material was placed in a rotary furnace; the material was heated to 1000°C in an argon protective atmosphere; argon and propylene were introduced at a volume ratio of 1:1 for gas-phase coating; and the temperature was held for 2 hours, and the organic gas source was then turned off. The material was cooled, discharged and classified to obtain the silicon-based cathode material containing a carbon coating, where the content of carbon was 3%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Comparative Example 2

The mixed powder of 1 kg of silicon powder, 1 kg of silicon dioxide, and 0.3 kg of copper oxide was placed in a vacuum furnace, which was then vacuumized to 50 Pa, and the mixture was heated to 1500°C to turn into vapor. After 3-hour reaction, a resultant material was cooled to room temperature. The material was discharged and crushed to obtain a silicon monoxide cathode material with carbon elements uniformly and dispersively distributed therein on an atomic scale. Afterwards, carbon coating was carried out on the silicon-based composite material. Specifically, 2 kg of the material was placed in a rotary furnace; the material was heated to 1000°C in an argon protective atmosphere; argon and propylene were introduced at a volume ratio of 1:1 for gas-phase coating; and the temperature was held for 2 hours, and the organic gas source was then turned off. The material was cooled, discharged and classified to obtain a silicon monoxide cathode material containing a carbon coating, where the total content of carbon was 3%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

### Comparative Example 3

The mixed powder of 1 kg of silicon powder and 1 kg of silicon dioxide powder was placed in a vacuum furnace, which was then vacuumized to 50 Pa, and the mixture was heated to 1500°C to turn into vapor. Subsequently, under an argon flow, 1.6 L of methane was slowly introduced at the same time to react for 3 hours, and a resultant material was cooled to room temperature. The material was discharged and crushed to obtain silicon monoxide cathode material with carbon elements uniformly and dispersively distributed therein on an atomic scale. It was tested by a carbon sulfur analyzer that the carbon content was 1.7%. Afterwards, carbon coating was carried out . Specifically, 2 kg of the material was placed in a rotary furnace; the material was heated to 1000°C in an argon protective atmosphere; argon and propylene were introduced at a volume ratio of 1:1 for gas-phase coating; and the temperature was held for 2 hours, and the organic gas source was then turned off. The material was cooled, discharged and classified to obtain a silicon oxide cathode material containing a carbon coating, where the total content of carbon was 4.7%.

The processes of preparing a cathode plate, assembling a battery, and testing the battery were the same as those in Example 1. The test results of initial efficiency, reversible capacity at 0.1 C, and cycling performance at 0.1 C rate are shown in Table 1.

The test results of initial efficiency, reversible capacity at 0.1 C, cycling performance at 0.1 C rate for the cathode materials in Examples 1 to 14 and Comparative Example 1 to 3 were respectively as follows:

**Table 1**

| | Initial efficiency | Reversible capacity at 0.1 C (mAh/g) | 100-cycle retention rate at 0.1 C rate (%) | 500-cycle retention rate at 0.1 C rate (%) |
|---|---|---|---|---|
| Example 1 | 84.17 | 1445 | 91 | 78 |
| Example 2 | 84.91 | 1438 | 93 | 80 |
| Example 3 | 84.93 | 1406 | 91 | 76 |
| Example 4 | 84.92 | 1435 | 88 | 75 |
| Example 5 | 85.09 | 1463 | 87 | 73 |
| Example 6 | 84.98 | 1326 | 89 | 76 |
| Example 7 | 85.13 | 1378 | 86 | 78 |
| Example 8 | 84.75 | 1493 | 90 | 77 |
| Example 9 | 83.96 | 1471 | 89 | 75 |
| Example 10 | 83.15 | 1465 | 87 | 73 |
| Example 11 | 84.46 | 1434 | 88 | 74 |
| Example 12 | 82.29 | 1467 | 92 | 79 |
| Example 13 | 82.16 | 1492 | 85 | 72 |
| Example 14 | 82.03 | 1450 | 87 | 75 |
| Comparative Example 1 | 79.74 | 1749 | 76 | 41 |
| Comparative Example 2 | 85.31 | 1420 | 72 | 35 |
| Comparative Example 3 | 76.21 | 1540 | 88 | 76 |

From the data of Comparative Examples 1 to 3 in the table, it could be seen that the silicon monoxide doped with the copper element in Comparative Example 2 is significantly improved in initial efficiency but with an inferior cycling performance, as compared with Comparative Example 1. The silicon monoxidedoped with the carbon element in Comparative Example 3 is significantly improved in cycling capacity retention rate but with a slightly inferior initial efficiency, as compared with Comparative Example 1. In Examples 1 to 14, the bulk-phase doping of the carbon and A elements in the material increases the inner electroconductivity of the particles, providing a buffer space for the expansion of the material and simultaneously improving the initial efficiency and cycling life of the material.

The objects, technical solutions and advantageous effects of the present invention are further illustrated in detail with the specific embodiments described above. It should be understood that the above description only involves the specific embodiments of the present invention and is not intended to limit the protection scope of the present invention. Any modifications, equivalent substitutions, improvements and the like made within the spirit and principle of the present invention shall be construed as being included within the protection scope of the present invention.

## Claims

1. A uniformly modified silicon-based composite material, **characterized in that** having a general formula of SiCₓA_{y}O_{z}, with 0 < x < 20, 0 < y < 10, and 0 < z < 10,
wherein A is one or more of B, Al, Mg, Ca, Fe, Co, Ni, Cu, Zn, Ge, Sn, and Li, C is uniformly and dispersively distributed on an atomic scale inside particles of the silicon-based composite material, and no carbon element agglomeration above 20 nm occurs; some or all of carbon atoms bind to silicon atoms to form unordered Si-C bonds; in a focused ion beam-transmission electron microscopy FIB-TEM test for the silicon-based composite material, energy-spectrum surface scanning of particle sections shows uniform distribution of silicon, carbon, A and oxygen elements inside the particles;
the silicon-based composite material has a multi-phase dispersive microstructure;
the particles of the silicon-based composite material have an average particle size D₅₀ of 1 nm-100 µm and a specific surface area of 0.5 m²/g-40 m²/g; the carbon atoms have a mass accounting for 0.1%-40% of a mass of the silicon-based composite material; and the A element has a mass accounting for 3%-40% of the mass of the particles of the composite material.

2. The silicon-based composite material according to claim 1, wherein the silicon-based composite material has a carbon coating outside; and the carbon coating has a mass accounting for 0%-20% of the mass of the silicon-based composite material.

3. The silicon-based composite material according to claim 2, wherein the carbon atoms have the mass accounting for 0.5%-10% of the mass of the silicon-based composite material; and the carbon coating has the mass accounting for 0%-10% of the mass of the silicon-based composite material.

4. A preparation method for the uniformly modified silicon-based composite material according to any one of claims 1 to 3, comprising a one-step vapor deposition method or a two-step vapor deposition method.

5. The preparation method according to claim 4, wherein the one-step vapor deposition method comprises:
mixing silicon powder, silicon dioxide powder, elemental A powder and/or A oxide powder uniformly according to a desired amount, and placing a resulting mixture in a vacuum furnace;
reducing the pressure of the vacuum furnace, and heating the furnace to 1200°C-1700°C to obtain a mixed vapor containing silicon, oxygen and A elements;
introducing a carbon-containing gas source in a protective atmosphere into the vacuum furnace to carry out a gas-phase mixing reaction with the mixed vapor for 1-24 hours; and
cooling a material resulting from the gas-phase mixing reaction to room temperature, and discharging, crushing and sieving the material to obtain a silicon-based composite material SiCₓA_{y}O_{z} with carbon elements uniformly and dispersively distributed on an atomic scale.

6. The preparation method according to claim 4, wherein the two-step vapor deposition method comprises:
mixing silicon powder and silicon dioxide powder uniformly according to a desired amount, and placing a resulting mixture in a vacuum furnace;
reducing the pressure of the vacuum furnace, and heating the furnace to 1200°C-1700°C to obtain a mixed vapor containing silicon and oxygen elements;
introducing a carbon-containing gas source in a protective atmosphere into the vacuum furnace to carry out a gas-phase mixing reaction with the mixed vapor for 1-24 hours;
cooling a material resulting from the gas-phase mixing reaction to room temperature, and discharging, crushing and sieving the material to obtain a composite material SiCₓO_{z} with carbon elements uniformly and dispersively distributed on an atomic scale; and
mixing SiCₓO_{z} and elemental A powder and/or A oxide powder uniformly, placing a resulting mixture in a high-temperature furnace, and thermally treating the mixture for 2-24 hours at 600°C-1500°C to obtain a silicon-based composite material SiCₓA_{y}O_{z} with carbon elements uniformly and dispersively distributed on an atomic scale.

7. The preparation method according to claim 5 or 6, wherein the carbon-containing gas source comprises: one or more of methane, propane, butane, acetylene, ethylene, propylene, butadiene, or carbon monoxide.

8. The preparation method according to claim 5 or 6, wherein after cooling the material to room temperature, and discharging, crushing and sieving the material, the preparation method further comprises: carrying out carbon coating on the sieved material, wherein the carbon coating comprises at least one of gas-phase coating, liquid-phase coating, and solid-phase coating.

9. A cathode plate comprising the uniformly modified silicon-based composite material according to any one of claims 1 to 3.

10. A lithium battery comprising the cathode plate according to claim 9.
